# EUROPÄISCHE PATENTANMELDUNG

(11) **EP 3 406 584 A1**
(43) Veröffentlichungstag der Anmeldung: **28.11.2018**
(21) Anmeldenummer: 17172661.5
(22) Anmeldetag: 24.05.2017
(51) Int. Cl.: C05F 11/02

(54) **DAUERHUMUS-WASSERSPEICHERHYBRID**

(71) Anmelder: Novihum Technologies GmbH, 01307 Dresden (DE)
(72) Erfinder: NINNEMANN, Horst, 44263 Dortmund (DE); SCHLIPF, Michael, 73035 Göppingen (DE); MOREIRA, André, 67063 Ludwigshafen (DE); LANGER, Peter, 49025 Hasbergen (DE); SORGE, Reinhard, 06809 Roitzsch (DE)
(74) Vertreter: Best, Michael

(57) **Zusammenfassung**

Die vorliegende Erfindung betrifft ein Dauerhumus-Wasserspeicherhybrid umfassend ein organisches Düngemittel aus oxidierend und ammonisierend behandelter Braunkohle und mindestens eine wasserspeichernde Komponente auszuwählen aus Materialien mineralischen oder organischen Ursprungs, wobei der Anteil an dem organischen Düngemittel 0,5-99,9 Vol.-%, vorzugsweise 1,0-90,0 Vol.-%, und der Anteil an der mindestens einen wasserspeichernden Komponente 0,1-99,5 Vol.-%, vorzugsweise 10,0-99,0 Vol.-%, ausmacht, Verfahren zu Herstellung des Dauerhumus-Wasserspeicherhybrid und dessen Verwendung als Pflanzensubstrat, Zusatzstoff für Pflanzenerde und Zusatzstoff für Böden.

## Beschreibung

Die vorliegende Erfindung betrifft ein Dauerhumus-Wasserspeicherhybrid, umfassend ein organisches Düngemittel aus oxidierend und ammonisierend behandelter Braunkohle und mindestens eine wasserspeichernde Komponente, ausgewählt aus Materialien mineralischen oder organischen Ursprungs. Das Dauerhumus-Wasserspeicherhybrid ist insbesondere geeignet und vorgesehen als Zusatzstoff für Pflanzensubstrate.

Dauerhumus ist als mikrobiell schwer umsetzbare organische Substanz zu verstehen die nur langsam abgebaut wird. Im Bodengefüge macht Dauerhumus für gewöhnlich einen großen Teil der organischen Bodensubstanz aus (Schinner F, Sonnleitner R.: "Bodenökologie: Mikrobiologie und Bodenenzymatik Band I: Grundlagen, Klima, Vegetation und Bodentyp", Springer-Verlag, 1996, Seite 37, 2.3.5). Dauerhumus besteht zu einem Großteil aus Huminstoffen, d.h. mikrobiell schwer umsetzbare, humifizierte organische Substanzen; der Dauerhumus hat somit Huminstoffcharakter. Zu den Huminstoffen gehören die Fulvosäuren, die Hymatomelansäuren, die Huminsäuren und die Humine (Fiedler, H.J. und Reissig, H.: "Lehrbuch der Bodenkunde", Gustav Fischer Verlag Jena, 1964, S. 174 Pkt. 4.423)

Bei defizitärer Wasserversorgung auf Standorten mit weniger bindigen oder nichtbindigen Böden, d.h. Böden mit relativ niedrigem Ton-/Schluffanteil (Ton: Partikel < 2µm, Schluff: 50% der Partikel zwischen 0,002 bis 0,063mm) bzw. relativ hohem Sandanteil (Sand: Definiert als Korn zwischen 0,063 bis 2 Millimeter Durchmesser), können für das Pflanzenwachstum von Kulturpflanzen Probleme auftreten, die sich in Form verminderter Wuchsleistung, Ertrag und bis hin zum Absterben der Pflanzungen zeigen. Im gewerblichen Agrar- und Gartenbau sind insbesondere bei Kulturpflanzen in diesen Fällen technische Aufwendungen und Maßnahmen notwendig, welche die Defizite der Wasserversorgung teilweise oder vollständig ausgleichen. Zu diesen Aufwendungen und Maßnahmen zählen unter anderem der Einsatz von Bewässerungssystemen, die die Gefahr der Über- oder Unterwässerung mit sich bringen, oder indirekte Maßnahmen, wie beispielsweise aufwendige Beschattungssysteme, die entweder den Lichteinfall permanent reduzieren oder gesteuert werden müssen, um einen genügenden Ertrag zu gewährleisten.

Eine nachhaltige und langfristige Möglichkeit zur Verbesserung der Wasserhaushaltssituation von Pflanzen auf Standorten mit weniger bindigen oder nichtbindigen Böden ist die Anhebung des Bodenanteils an bindigen Materialien, d.h. ton- und schluffhaltiger Materialien oder strukturverbessernden organischen Substanzen, wie Stallmist, Komposte und dergleichen. Hierzu müssen jedoch große Mengen solcher Ton- und Schluffmaterialien oder organischer Substanzen dem Boden oder den verwendeten Substraten zugemischt werden. Die natürliche Verfügbarkeit dieser bindigen Materialien, insbesondere der organischen Substanzen ist teilweise beschränkt, und deren Einsatz deshalb in den benötigten Mengen mit erheblichen Kosten verbunden.

Mit steigender Weltbevölkerung und weltweit abnehmender Menge an kultivierbaren Böden wird die Ernährung der Bevölkerung in vielen Gegenden zunehmend problematisch. Eine Verbesserung von Böden, die ansonsten nur schlecht (mit geringem Ertrag) oder gar nicht zur Erzeugung von Nutzpflanzen (aber auch Zierpflanzen) geeignet sind, könnte dieses Problem lindern. Es besteht daher ein Bedarf nach einem Produkt, das in verschiedenster Art und Weise Böden und Pflanzen zugeführt werden kann und das zu einem längerfristig höheren Pflanzenwachstum und Ertrag führt.

Aufgabe der vorliegenden Erfindung besteht somit in der Bereitstellung eines derartigen Produktes. Das Produkt soll bei Verwendung als Pflanzensubstrat bzw. als Zusatzstoff für Pflanzensubstrate und Substratzusatzstoff für Böden zu einer signifikanten Verbesserung der Ertragssteigerung auch auf ansonsten "schlechten" Böden führen und darüber hinaus kostengünstig und in großem Maßstab herstellbar sein.

Gelöst wird diese Aufgabe erfindungsgemäß durch ein Dauerhumus-Wasserspeicherhybrid umfassend ein organisches Düngemittel aus oxidierend und ammonisierend behandelter Braunkohle und mindestens eine wasserspeichernde Komponente ausgewählt aus Materialien mineralischen oder organischen Ursprungs, wobei der Anteil an dem organischen Düngemittel 0,5-99,9 Vol.-%, vorzugsweise 1,0-90,0 Vol.-%, und der Anteil an der mindestens einen wasserspeichernden Komponente 0,1-99,5 Vol.-%, vorzugsweise 10,0-99,0 Vol.-%, ausmacht. Das erfindungsgemäße Dauerhumus-Wasserspeicherhybrid führt zu einer signifikanten Steigerung des Pflanzenwachstums und somit des Ertrages, insbesondere bei Böden die ansonsten allenfalls mit geringem Ertrag bepflanzt werden könnten.

Dauerhumus ist entsprechend der oben gegebenen Definition eine mikrobiell schwer umsetzbare organische Substanz mit Huminstoffcharakter. Unter Wasserspeicher sind im Folgenden poröse mineralische, insbesondere tonmineralische, und organische Substanzen zu verstehen. Unter Hybrid ist erfindungsgemäß die Kombination aus dem organischen Düngemittel und der mindestens einen wasserspeichernden Komponente zu verstehen.

Als einen ersten Bestandteil enthält das Dauerhumus-Wasserspeicherhybrid ein organisches Düngemittel aus oxidierend und ammonisierend behandelter Braunkohle. Aufgrund ihrer chemischen Eigenschaften und ihrer Verfügbarkeit hat Braunkohle schon seit längerer Zeit Interesse als Ausgangsmaterial für die Herstellung von Stoffen bzw. Stoffgemischen mit Düngewirkung gefunden. Bei der oxidierenden und ammonisierenden Behandlung von Braunkohle handelt es sich um eine "oxidative Ammonolyse". Die oxidative Ammonolyse wurde von Flaig, et.al. (1959) beispielsweise in "Umwandlung von Lignin in Huminsäuren bei der Verrottung von Weizenstroh" Chem.Ber.,92 8, 1973-1982 beschrieben.

Verfahren zur Herstellung von organischem Düngemittel aus oxidierend und ammonisierend behandelter Braunkohle werden beispielsweise in der EP 1 144 342 A1 und in der internationalen Patentanmeldung mit der Anmeldenummer PCT/EP2017/060060 offenbart. Das organische Düngemittel des Dauerhumus-Wasserspeicherhybrids der vorliegenden Erfindung hat Huminstoffcharakter. In Analogie zum Huminstoffcharakter des Dauerhumus (siehe oben), bedeutet Huminstoffcharakter in Bezug auf das organische Düngemittel des Dauerhumus-Wasserspeicherhybrids der vorliegenden Erfindung, dass das organische Düngemittel zu einem Großteil aus Huminstoffen besteht. Zu den Huminstoffen gehören die Fulvosäuren, die Hymatomelansäuren, die Huminsäuren und die Humine (Fiedler, H.J. und Reissig, H.: "Lehrbuch der Bodenkunde", Gustav Fischer Verlag Jena, 1964, S. 174 Pkt. 4.423). Zu einem Großteil in Bezug auf den Huminstoffanteil bedeutet vorliegend, dass die Huminstoffe den größten Gewichtsanteil des organischen Düngemittels des Dauerhumus-Wasserspeicherhybrids der vorliegenden Erfindung im getrockneten Zustand ausmachen. Beispielsweise ist darunter zu verstehen, dass die Huminstoffe > 50 Gew.-%, vorzugsweise > 60 Gew.-%, noch bevorzugter > 70 Gew.-%., und insbesondere bevorzugt > 80 Gew.-%, des organischen Düngemittels des Dauerhumus-Wasserspeicherhybrids der vorliegenden Erfindung im getrockneten Zustand ausmachen.

Die Abkürzungen "Gew.-%" und "Vol.-%", wie hierein verwendet, stehen für "Gewichtsprozent" bzw. "Volumenprozent" und bezeichnen das Volumen bzw. das Gewicht eines Anteils bezogen auf ein Gesamtgewicht bzw. ein Gesamtvolumen. Um welchen Anteil es sich handelt, und auf welches Gesamtgewicht oder Gesamtvolumen dieser bezogen ist, wird im Rahmen der vorliegenden Beschreibung der Erfindung an entsprechender Stelle jeweils angegeben.

Die Anwendung des organischen Düngemittels aus oxidierend und ammonisierend behandelter Braunkohle allein verbessert das Wasserausnutzungsvermögen von Pflanzen. Es hat sich jedoch gezeigt, dass dies für viele Einsatzzwecke nicht ausreichend ist, insbesondere, wenn eine längerfristige Versorgung der Pflanzen bei fehlender Wasserversorgung notwendig ist. Überraschenderweise hat sich nun gezeigt, dass die Kombination des organischen Düngemittels mit mindestens einer wasserspeichernden Komponente, wenn sie Böden und Substraten zugeführt wird, die Wasserhaushaltssituation synergistisch verbessert und zu einer höheren Ertragssteigerung führt als das organische Düngemittel und die mindestens eine wasserspeichernde Komponente alleine. Böden sind vorliegend als Abschnitte des obersten, belebten Teils der Erdkruste des Festlandes zu verstehen. Unter Substraten sind vorliegend Nährböden aller Art zu verstehen, einschließlich des gewachsenen Erdbodens, der durch seinen jeweiligen Bodentyp gekennzeichnet wird (Bernhard Berg: Grundwissen des Gärtners. Ulmer, Stuttgart 1976, S. 198-206).

Unter wasserspeichernden Komponenten sind erfindungsgemäß Stoffe, insbesondere poröser Natur, zu verstehen die die Wasserkapazität von Böden und Substraten erhöhen. Wasserspeichernde Komponenten aus Materialien mineralischen Ursprungs, im Sinne der vorliegenden Erfindung, sind poröse mineralische Substanzen, insbesondere tonmineralische Substanzen (Schichtminerale). Wasserspeichernde Komponenten aus Materialien organischen Ursprungs, im Sinne der vorliegenden Erfindung, sind poröse organische Substanzen, wie Komposte, gerottete Wirtschaftsdünger oder Holzkohle und deren Derivate.

Im erfindungsgemäßen Dauerhumus-Wasserspeicherhybrid macht der Anteil an dem organischen Düngemittel 0,5-99,9 Vol.-%, vorzugsweise 1,0-95,0 Vol.-%, noch bevorzugter 1,0-90,0 Vol.-%, und der Anteil an der mindestens einen wasserspeichernden Komponente 0,1-99,5 Vol.-%, vorzugsweise 5,0-99,0 Vol.-%, noch bevorzugter 10,0-99,0 Vol.-%, jeweils bezogen auf das Gesamtvolumen des Dauerhumus-Wasserspeicherhybrids, aus.

Das organische Düngemittel in Kombination mit der wasserspeichernden Komponente ermöglicht den Pflanzen den effizienteren Umgang mit den Wasserreserven im Substrat. Der Einsatz des Dauerhumus-Wasserspeicherhybrids der vorliegenden Erfindung zeigt seine Wirkung in einem Anstieg des Wasserausnutzungsgrades, d.h. Pflanzen können unter Einsatz des Dauerhumus-Wasserspeicherhybrids bei defizitärer Wasserversorgung mehr Ertrag generieren als ohne Dauerhumus-Wasserspeicherhybrid. Zusätzlich wird die Wasserkapazität des Substrats bzw. des Bodens erhöht.

Die wasserspeichernden Komponenten aus Materialien mineralischen Ursprungs des Dauerhumus-Wasserspeicherhybrids der vorliegenden Erfindung sind nicht weiter beschränkt. In einer Ausführungsform der vorliegenden Erfindung sind die wasserspeichernden Komponenten aus Materialien mineralischen Ursprungs auszuwählen aus wasserspeichernden, quellfähigen Gesteinen, Mineralen und Mineralprodukten. In einer weiteren Ausführungsform der vorliegenden Erfindung sind die Materialien mineralischen Ursprungs auszuwählen aus Tonmineralen, tonmineraihaltigen Substanzen sowie verarbeiteten Mineralen und Gesteinen, wie Perlite, Ton, Bentonit, Zeolith, Sepiolith, Attapulgit, gebrannter Ton, Blähton, Blähschiefer, Kieselsäuren und Smectite. In einer bevorzugten Ausführungsform der vorliegenden Erfindung sind die Materialien mineralischen Ursprungs auszuwählen aus Tonmineralen, tonmineralhaltigen Substanzen, Perliten, Schichtsilikaten, Ton, Bentonit, Hectorit, Montmorillonit, Vermiculit, Zeolithen, Sepiolith, Attapulgit, gebranntem Ton, Blähton, Blähschiefer, vulkanischer Asche, Bims, Kieselgel und Smectiten. In einer besonders bevorzugten Ausführungsform der vorliegenden Erfindung sind die Materialien mineralischen Ursprungs auszuwählen aus Bentonit, Montmorillonit, Ton, gebranntem Ton, Blähton und Blähschiefer. Insbesondere bevorzugt als Material mineralischen Ursprungs ist ein Schichtsilikat wie Bentonit.

Bentonit der hier verwendet wird, enthält > 50 Gew.-%, bevorzugt 60-80 Gew.-%, Montmorillonit und damit eine sehr gute Quellfähigkeit, die auf der hohen inneren Oberfläche des Schichtsilikates von 400 - 600 m²/g beruht. Bevorzugt wird die natürlich vorkommende, gemahlene Form von Bentonit verwendet, beispielsweise aus den Landshuter Abbaugebieten, die z.B. von S&B Industrial Minerals GmbH oder Clariant vertrieben werden. Die wasserspeichernden Komponenten aus Materialien organischen Ursprungs des Dauerhumus-Wasserspeicherhybrids der vorliegenden Erfindung sind nicht weiter beschränkt. In einer Ausführungsform der vorliegenden Erfindung umfassen die wasserspeichernden Komponenten aus Materialien organischen Ursprungs Komposte, gerottete Wirtschaftsdünger, kohleartige Produkte, Lignocellulosematerial und andere ligninhaltige Strukturen. In einer bevorzugten Ausführungsform der vorliegenden Erfindung sind die wasserspeichernden Komponenten aus Materialien organischen Ursprungs auszuwählen aus Komposten, gerotteten Wirtschaftsdüngern, kohleartigen Produkten, Lignocellulosematerial, Holzfasern, Holzwolle, Kokosfasern, Hanffasern und Flachsfasern. In einer weiteren bevorzugten Ausführungsform der vorliegenden Erfindung sind die Materialien organischen Ursprungs Komposte, gerottete Wirtschaftsdünger und Holzkohle und deren Derivate. Insbesondere bevorzugt sind Komposte.

Kompost ist eine humus- und nährstoffreiche Substanz, die als Endprodukt bei der Kompostierung von organischen Abfällen entsteht und stets eine feste Konsistenz aufweist. Im Gegensatz zur Vergärung finden die biologischen Prozesse bei der Kompostierung unter Einwirkung von Luftsauerstoff statt. In diesem Zusammenhang wird auch von aerober Behandlung bzw. Zersetzung gesprochen (Verband der Humus- und Erdenwirtschaft e.V.: www.vhe.de). Zu den gerotteten Wirtschaftsdüngern im Sinne der vorliegenden Erfindung zählen insbesondere gerotteter Mist und Dung (beispielsweise Rindermist/-dung, Schafmist/-dung, Pferdemist/-dung, etc.), gerottete Futterreste und gerotteter Rindenmulch. Mist ist dabei als die in der Landwirtschaft bei der Viehhaltung anfallende Mischung aus Exkrementen von Tieren und einem Bindemedium wie Stroh, Hobelspäne oder Hanfhäcksel zu verstehen. Dung ist in der Landwirtschaft bei der Viehhaltung anfallendes Exkrement mit Feststoffanteil. Der Begriff "gerottet" in Bezug auf Wirtschaftsdünger bedeutet die wenigstens teilweise Zersetzung und Umwandlung unter aeroben, teilaeroben, teilanaeroben oder weitgehend anaeroben Bedingungen. Kohleartige Produkte umfassen insbesondere Holzkohle und deren Derivate (Schilling, G., 2000, Pflanzenernährung und Düngung, Ulmer Stuttgart).

In einer alternativen Ausführungsform des erfindungsgemäßen Dauerhumus-Wasserspeicherhybrids macht der Anteil an organischem Düngemittel beispielsweise 0,5-60,0 Vol.-%, vorzugsweise 0,5-40,0 Vol.-%, bevorzugter 0,5-20,0 Vol.-%, noch bevorzugter 1,0-10,0 Vol.-%, insbesondere bevorzugt 1,0-5,0 Vol.-%, und der Anteil an der mindestens einen wasserspeichernden Komponente beispielsweise 40,0-99,5 Vol.-%, vorzugsweise 60,0-99,5 Vol.-%, bevorzugter 80,0-99,5 Vol.-%, noch bevorzugter 90,0-99,0 Vol.-%, insbesondere bevorzugt 95,0-99,0 Vol.-%, jeweils bezogen auf das Gesamtvolumen des Dauerhumus-Wasserspeicherhybrids, aus.

In einer weiteren alternativen Ausführungsform des erfindungsgemäßen Dauerhumus-Wasserspeicherhybrids macht der Anteil an organischem Düngemittel 1,0-99,0 Vol.-%, vorzugsweise 5,0-99,0 Vol.-%, bevorzugter 20,0-99,0 Vol.-%, noch bevorzugter 30,0-95,0 Vol.-%, 50,0-95,0 Vol.-%, 60,0-95,0 Vol.-% oder 70,0-90,0 Vol.-%, insbesondere bevorzugt ungefähr 90,0 Vol.-%, und der Anteil an der mindestens einen wasserspeichernden Komponente 1,0-99,0 Vol.-%, vorzugsweise 1,0-95,0 Vol.-%, bevorzugter 1,0-80,0 Vol.-%, noch bevorzugter 5,0-70,0 Vol.-%, 5,0-50,0 Vol.-%, 5,0-40,0 Vol.-% oder 10,0-30,0 Vol.-%, insbesondere bevorzugt ungefähr 10,0 Vol.-%, jeweils bezogen auf das Gesamtvolumen des Dauerhumus-Wasserspeicherhybrids, aus.

In noch einer weiteren alternativen Ausführungsform des erfindungsgemäßen Dauerhumus-Wasserspeicherhybrids macht der Anteil an organischem Düngemittel 0,5-99,5 Vol.-%, vorzugsweise 5,0-95,0 Vol.-%, noch bevorzugter 10,0-90,0 Vol.-%, insbesondere bevorzugt 20,0-80,0 Vol.-%, und der Anteil an der mindestens einen wasserspeichernden Komponente 0,5-99,5 Vol.-%, vorzugsweise 5,0-95,0 Vol.-%, noch bevorzugter 10,0-90,0 Vol.-%, insbesondere bevorzugt 20,0-80,0 Vol.-%, jeweils bezogen auf das Gesamtvolumen des Dauerhumus-Wasserspeicherhybrids, aus.

Gemäß der vorliegenden Erfindung ist das organische Düngemittel aus oxidierend und ammonisierend behandelter Braunkohle des Dauerhumus-Wasserspeicherhybrids nicht weiter eingeschränkt. In einer Ausführungsform der Erfindung weist das organische Düngemittel ein C/N-Verhältnis von 7 bis 15, bevorzugt 8 bis 15, stärker bevorzugt 9 bis 15 und einen Stickstoffgehalt von bis zu 8 Gew.-%, bezogen auf das Trockengewicht des Düngemittels, auf. Vorzugsweise beträgt der Stickstoffgehalt des organischen Düngemittels mindestens 4 Gew.-%, stärker bevorzugt mindestens 5 Gew.-% und insbesondere bevorzugt mindestens 6 Gew.-%, jeweils bezogen auf das Trockengewicht des Düngemittels.

Der Stickstoff liegt in dem organischen Düngemittel in verschiedenartigen chemischen Bindungsformen vor. Ein Teil des Stickstoffs liegt in der Ammoniumform gebunden vor, welche kurzfristig pflanzenverfügbar ist (beispielsweise 10 bis 41 Gew.-%, bezogen auf den Gesamtgehalt an Stickstoff des organischen Düngemittels). Ein weiterer Teil liegt gebunden in fest organisch gebundenen Bindungsformen vor, welche eine langfristige Pflanzenverfügbarkeit aufweisen (beispielsweise 4 bis 73 Gew.-%, bezogen auf den Gesamtgehalt an Stickstoff des organischen Düngemittels). Ein weiterer Teil liegt in der Amidform vor, welche mittelfristig pflanzenverfügbar ist (beispielsweise 14 bis 21 Gew.-%, bezogen auf den Gesamtgehalt an Stickstoff des organischen Düngemittels).

Die chemischen Bindungsformen unterscheiden sich hinsichtlich ihrer Hydrolysierbarkeit. Der in der Ammoniumform gebundene Stickstoff ist mit in Wasser suspendiertem MgO leicht als Ammoniak abzuspalten, während die organischen Bindungsformen schwerer hydrolysierbar sind. Der Teil, der in der Amidform vorliegt, kann auf normale Weise mit verdünnter Natronlauge unter den Bedingungen der Wasserdampfdestillation hydrolysiert werden. Der unter diesen experimentellen Bedingungen nicht hydrolysierbare Anteil stellt den festen, organisch gebundenen Stickstoff dar.

In einer Ausführungsform der vorliegenden Erfindung weist das organische Düngemittel ein C/N-Verhältnis von 7 bis 15 auf und gemessen am Gesamtstickstoff liegt der Stickstoff chemisch unterschiedlich gebunden vor, wovon 20 - 45 % als Ammonium-Stickstoff vorliegen, 55 - 80 % organisch gebunden sind, wovon bis zu 20 % des Gesamtstickstoffs als Amid und bis zu 60 % nicht als Amid hydrolysierbar organisch gebunden sind.

Das Herstellungsverfahren des organischen Düngemittels aus oxidierend und ammonisierend behandelter Braunkohle des erfindungsgemäßen Dauerhumus-Wasserspeicherhybrids ist nicht weiter beschränkt. In einer Ausführungsform der vorliegenden Erfindung ist das organische Düngemittel aus oxidierend und ammonisierend behandelter Braunkohle des erfindungsgemäßen Dauerhumus-Wasserspeicherhybrids erhältlich nach einem Verfahren umfassend die folgenden Schritte:
a) Überführen von Braunkohle und wässriger Ammoniaklösung mit einem pH-Wert größer 9 bis 12 in eine Suspension und alkalische Aktivierung der Suspension zunächst ohne Zufuhr eines sauerstoffhaltigen Oxidationsmittels;
b) Einspeisen des sauerstoffhaltigen Oxidationsmittels in die Suspension aus Braunkohle und wässriger Ammoniaklösung, wobei die Oxidation bei einer Reaktionstemperatur < 100 °C und einem Druck von 0,1-1 MPa abläuft;
c) Eindicken der in Schritt b) erhaltenen Produktsuspension zu einer Dispersion im wässrigen Milieu oder Trocknen der in Schritt b) erhaltenen Produktsuspension zu einem getrockneten Produkt ohne Zufuhr des sauerstoffhaltigen Oxidationsmittels und abschließendes Abkühlen, wodurch das organische Düngemittel gewonnen wird.

Die wässrige Ammoniaklösung, welche in Schritt a) verwendet wird, kann durch Lösen von Ammoniak in Wasser gewonnen werden. Die wässrige Ammoniaklösung bzw. deren Ausgangsstoffe Wasser und Ammoniak können auch aus dem Reaktionsprozess, insbesondere aus den Schritten b) und Schritt c), zurückgewonnen und dem Verfahren wieder zur Verfügung gestellt werden, was zur Wirtschaftlichkeit des Verfahrens beiträgt.

Die wässrige Ammoniaklösung in Schritt a) weist vorzugsweise eine Konzentration von bis zu 10 Gew.-% auf, wobei die Konzentration vorzugsweise mindestens 2 Gew.-% beträgt, jeweils bezogen auf das Gesamtgewicht der wässrigen Ammoniaklösung. Bevorzugter ist eine Konzentration von 3 bis 8 Gew.-%, und insbesondere bevorzugt ist eine Konzentration von 4 bis 6 Gew.-%, jeweils bezogen auf das Gesamtgewicht der wässrigen Ammoniaklösung.

Die Braunkohle kann mit unterschiedlicher Partikelgröße eingesetzt werden und kann insgesamt ohne vorherige Trennoperationen umgesetzt werden. Es können Braunkohlen unterschiedlicher Standorte (Herkunft) als Ausgangsmaterial eingesetzt werden. Außerdem kann Braunkohle im Gemisch mit technischen Ligninen der Zellstoffindustrie sowie der Holzhydrolyse, Braunkohle im Gemisch mit Lignin sowie Lignocellulosematerial aus dem Steam Explosion-Aufschluss zur Faserherstellung und Braunkohle im Gemisch mit Lignocellulosematerial wie Holz und Rindepartikel verwendet werden. Besagte Gemische können vorgemischt eingesetzt werden oder durch Mischen der einzelnen Bestandteile und der wässrigen Ammoniaklösung in Schritt a) erhalten werden.

Die Oxidation in Schritt b) kann in einem wässrig-ammoniakalischen Milieu mit einer Ammoniakkonzentration bis zu 7 % durchgeführt werden. In einer Ausführungsform ist das sauerstoffhaltige Oxidationsmittel auszuwählen aus Luft, Sauerstoff, Luft/Sauerstoff-Gemischen, Ozon oder Wasserstoffperoxid. Weiterhin können im Rahmen der Oxidation in Schritt b) Katalysatoren verwendet werden, welche die Aktivität des Oxidationsmittels erhöhen.

Die Oxidation in Schritt b) erfolgt vorzugsweise über einen Zeitraum von 15 bis 300 min, bevorzugter 30 bis 240 min, insbesondere bevorzugt 45 bis 120 min. Durch die Oxidation der aus Schritt a) erhaltenen Suspension in dieser Zeitspanne mit dem sauerstoffhaltigen Oxidationsmittel entsteht eine Suspension, welche das Oxidationsprodukt der aus Schritt a) erhaltenen Suspension umfasst. Vorzugsweise wird das sauerstoffhaltige Oxidationsmittel direkt in die Suspension eingeführt, beispielsweise im Falle eines gasförmigen Oxidationsmittels durch Eintragen des Gases in die Reaktionsmischung unter Überdruck. Die aus Schritt b) resultierende Suspension wird im Rahmen des Verfahrens als "Produktsuspension" bezeichnet, welche das Oxidationsprodukt enthält.

Bei dem abgekühlten Produkt, welches in Schritt c) erhalten wird, handelt es sich um ein organisches Düngemittel aus oxidierend und ammonisierend behandelter Braunkohle im Sinne der vorliegenden Erfindung. Bevorzugt ist das organische Düngemittel das getrocknete Produkt. Dieses organische Düngemittel hat wie oben beschrieben Huminstoffcharakter und weist vorzugsweise einen Stickstoffgehalt von bis zu 8 Gew.-%, bezogen auf das Trockengewicht des Düngemittels, und ein C/N-Verhältnis von 7 bis 15, besonders bevorzugt ein C/N-Verhältnis von 9 bis 15, auf. Das in dieser Weise hergestellte organische Düngemittel weist außerdem vorzugsweise einen Restfeuchtegehalt von maximal 35 Gew.-%, bezogen auf das Gesamtgewicht des organischen Düngemittels, auf.

Das Verfahren zur Herstellung des organischen Düngemittels kann technologisch beispielsweise so umgesetzt werden, dass, wie in der EP 1 144 342 beschrieben, die Braunkohle mit einer wässrigen Ammoniaklösung mit einem pH-Wert größer 9 bis 12 in eine Suspension überführt und anschließend in einem Reaktor zunächst ohne Zufuhr von Sauerstoff oder Luft alkalisch aktiviert und dabei in einer bis zu 0,5 h regelbaren Zeit auf eine Oxidationstemperatur von unter 100°C gebracht wird, anschließend das sauerstoffhaltige Oxidationsmittel, wobei es sich um ein Oxidationsgas handelt, bei einer Reaktionstemperatur unter 100°C und bei Luft oder Sauerstoff als Oxidationsgas unter Normaldruck und bei Luft-/Sauerstoffgemischen als Oxidationsgas bei Normaldruck mit einem Sauerstoffpartialdruck im Bereich von 0,02 MPa bis <0,1 MPa in das Reaktionsgemisch jeweils nach dem Injektorprinzip eingespeist wird und schließlich die Zufuhr von Oxidationsgas geschlossen und die Reaktion abgebrochen und das Reaktionsgemisch (Produktgemisch) anschließend ohne weitere Oxidationsgaszufuhr auf eine für die weitere Aufarbeitung notwendige Temperatur abgekühlt wird, wobei die Abkühlzeit weniger als 1 h beträgt, und das organische Düngemittel als Dispersion im wässrigen Milieu durch Eindicken oder Trocknen gewonnen wird, wobei ein C/N-Verhältnis von 9 bis 15 erhalten wird. Bezüglich spezifischer Verfahrensschritte einer derartigen Verfahrensdurchführung wird auf die EP 1 144 342 verwiesen.

In der internationalen Patentanmeldung mit der Anmeldenummer PCT/EP2017/060060 wurde das Verfahren der EP 1 144 342 weiterentwickelt zu einem kontinuierlichen Verfahren, wobei die Ausgangsstoffe Braunkohle und wässrige Ammoniaklösung kontinuierlich in das Verfahren eingespeist werden und die Reaktion nicht unterbrochen werden muss. Dadurch kann das organische Düngemittel bei hohem Durchsatz der Ausgangsstoffe und geringem Energiebedarf hergestellt werden.

Demgemäß wird in einer weiteren Ausführungsform der vorliegenden Erfindung das organische Düngemittel aus oxidierend und ammonisierend behandelter Braunkohle des erfindungsgemäßen Dauerhumus-Wasserspeicherhybrids durch ein kontinuierliches Verfahren hergestellt, das die folgenden Schritte umfasst:
a) Zuführen von Braunkohlepartikeln und wässriger Ammoniaklösung sowie gegebenenfalls rückgeführtes Produkt von Schritt b) als Ausgangsstoffe in einen Dispergierkreislauf mit Dispergiervorrichtung, Rezirkulationsbehälter und Zirkulationspumpe, und Dispergieren der Ausgangsstoffe unter gleichzeitiger Zerkleinerung der Braunkohlepartikel bis eine Suspension aus Braunkohlepartikeln und wässriger Ammoniaklösung entsteht, welche dem Dispergierkreislauf entnommen und Schritt b) zugeführt wird;
b) Oxidieren der in Schritt a) erhaltenen Suspension in einem Oxidationsreaktor mit einem sauerstoffhaltigen Oxidationsmittel bei einer Temperatur von <100°C, wobei eine Produktsuspension entsteht, welche vollständig Schritt c) oder teilweise Schritt c) und teilweise Schritt a) als Ausgangsstoff zugeführt wird;
c) Trocknen der in Schritt b) erhaltenen Produktsuspension bei einer Temperatur >50°C bis auf einen Restfeuchtegehalt von maximal 30 Gew.-%, bezogen auf das Gesamtgewicht des getrockneten Produkts und Abkühlen des erhaltenen getrockneten Produkts;
wobei das organische Düngemittel einen Stickstoffgehalt von bis zu 8 Gew.-%, bezogen auf das Trockengewicht des Düngemittels, und ein C/N-Verhältnis von 7 bis 15 aufweist.

Der Begriff "kontinuierliches Verfahren" ist vorliegend derart zu verstehen, dass dem Verfahren kontinuierlich Ausgangsmaterialien, bei denen es sich vorliegend insbesondere um Braunkohle und wässrige Ammoniaklösung sowie gegebenenfalls rückgeführte Produktsuspension von Schritt b) handelt, zugeführt werden, welche über die Schritte a) bis c) in getrocknetes und abgekühltes organisches Düngemittel als Produkt überführt werden, ohne dass es zu einer Unterbrechung des Verfahrens bzw. der Verfahrensschritte kommen muss, um das organische Düngemittel zu bilden und es dem Prozess zu entziehen.

Der Begriff "Dispergierkreislauf", wie hierein verwendet, bezeichnet eine Anordnung, welche Dispergiervorrichtung, Rezirkulationsbehälter und Zirkulationspumpe umfasst. Bei der Dispergiervorrichtung handelt es sich vorzugsweise um ein geschlossenes System, sodass ein Gasaustausch mit der Umgebung unterbunden ist. Vorzugsweise beträgt die mittlere Verweilzeit der Mischung aus Braunkohlepartikeln und wässriger Ammoniaklösung sowie gegebenenfalls rückgeführtem Produkt von Schritt b) in der Dispergiervorrichtung 30 bis 300 min, stärker bevorzugt 45 bis 240 min, insbesondere bevorzugt 60 bis 180 min, bevor die resultierende Suspension dem Dispergierkreislauf entnommen und Schritt b) zugeführt wird. Die mittlere Verweilzeit berechnet sich wie bei der kontinuierlichen Verfahrensführung üblich aus dem Gesamtvolumen der Dispergiervorrichtung und den zugeführten bzw. abgeführten Volumina (z.B. wäre bei einem Volumen der Dispergiervorrichtung von 100 I und einer Zu- bzw. Abfuhr von 25 I/h die mittlere Verweilzeit 4 h).

Das kontinuierliche Verfahren erlaubt die Verwendung von Braunkohleteilchen als Ausgangsprodukt, deren Größe keine entscheidende Rolle spielt, da während des Verfahrens eine Zerkleinerung der Braunkohleteilchen erfolgt. Aus praktischen Erwägungen heraus werden vorzugsweise im Rahmen des kontinuierlichen Verfahrens Braunkohlepartikel mit mittleren Partikelgrößen von >10 µm eingesetzt, wobei auch Braunkohlepartikel mit Partikelgrößen von z.B. bis zu 10 mm eingesetzt werden können. Stärker bevorzugt sind Braunkohlepartikel mit Partikelgrößen bis zu 5 mm, noch stärker bevorzugt bis zu 2 mm, noch stärker bevorzugt bis zu 1 mm, noch stärker bevorzugt bis zu 500 µm, insbesondere bevorzugt bis zu 100 µm. Bei den Braunkohlepartikeln handelt es sich vorzugsweise um Braunkohlestaub mit typischen mittleren Partikelgrößen im Bereich von >10 bis 600 µm, insbesondere im Bereich von 200 bis 300 µm, also um derzeit üblichen kommerziellen Braunkohlestaub. Im Rahmen des kontinuierlichen Verfahrens ist aber z.B. auch die Verwendung von Rohbraunkohle mit Partikelgrößen bis zu 10 mm möglich, wobei die Rohbraunkohle im Dispergierkreislauf, insbesondere in der Dispergiervorrichtung zerkleinert wird.

Bei der Dispergiervorrichtung handelt es sich gleichzeitig um eine Mischvorrichtung und eine Zerkleinerungsvorrichtung, wobei die Mischung aus Braunkohlepartikeln und wässriger Ammoniaklösung sowie gegebenenfalls rückgeführtes Produkt von Schritt b) unter gleichzeitiger Zerkleinerung der Braunkohlepartikel solange in der Dispergiervorrichtung gemischt wird, bis eine Suspension aus zerkleinerten Braunkohlepartikel und wässriger Ammoniaklösung entsteht. Durch das Zerkleinern der Braunkohlepartikel in der Dispergiervorrichtung können Braunkohlepartikel mit einer relativ einheitlichen Partikelgrößenverteilung erhalten werden, was die Bildung einer besonders homogenen Suspension ermöglicht, die in Schritt b) der Oxidation zugeführt wird.

Vorzugsweise werden die Braunkohlepartikel in der Dispergiervorrichtung auf eine mittlere Partikelgröße von ≤ 10 µm, stärker bevorzugt auf mittlere Partikelgrößen von <8 µm, noch stärker bevorzugt auf mittlere Partikelgrößen von <6 µm, und insbesondere auf mittlere Partikelgrößen <4 µm zerkleinert. Die Zerkleinerung der Braunkohlepartikel hat den Vorteil, dass die Reaktionsflächen deutlich vergrößert werden und die mittlere Größenverteilung relativ einheitlich ist, was die in Schritt b) durchgeführte Oxidationsreaktion begünstigt.

Wird als sauerstoffhaltiges Oxidationsmittel ein Gas verwendet, also beispielsweise Sauerstoff, sauerstoffangereicherte Luft, Luft oder Ozon, so wird dieses im kontinuierlichen Verfahren vorzugsweise mit einem Überdruck von bis zu 0,8 MPa mittels einer Gasdosierungsvorrichtung direkt in die Suspension eingetragen. "Überdruck" bedeutet im Rahmen der vorliegenden Erfindung, dass der Druck, mit dem das sauerstoffhaltige Oxidationsgas zugeführt wird, über Normaldruck liegt. Normaldruck entspricht einem Druck von 101325 Pa = 1,01325 bar. Demzufolge wird im Rahmen des kontinuirlichen Verfahrens das sauerstoffhaltige Gas mit einem Druck von >0,101325 MPa zugeführt, wobei das sauerstoffhaltige Gas mit einem Überdruck von bis zu 0,8 MPa zugeführt werden kann. Vorzugsweise wird das sauerstoffhaltige Gas mit einem Überdruck von mindestens 0,15 MPa zugeführt. Stärker bevorzugt ist ein Überdruck von 0,2 bis 0,8 MPa, noch stärker bevorzugt ein Überdruck von 0,3 bis 0,7 MPa und insbesondere bevorzugt ein Überdruck von 0,4 bis 0,6 MPa.

Bei der Gasdosierungsvorrichtung kann es sich beispielsweise um eine Düsenlanze, einen Begasungsring oder ein Begasungsrührwerk handeln, welche sich in dem Reaktor befinden und mit der Suspension in Kontakt stehen bzw. in diese eintauchen. Vorzugsweise handelt es sich bei der Gasdosierungsvorrichtung um ein Begasungsrührwerk, mit dem die Suspension gleichzeitig in dem Reaktor gerührt werden kann, was den Eintrag des sauerstoffhaltigen Oxidationsgases in die Suspension und damit die Oxidationsreaktion begünstigt.

Alternativ kann das sauerstoffhaltige Oxidationsmittel auch in Lösung zugesetzt werden, beispielsweise in Form einer wässrigen Wasserstoffperoxidlösung. Ferner können gasförmige Oxidationsmittel in Lösung, vorzugsweise in wässriger Lösung, zugesetzt werden.

Der Oxidationsreaktor arbeitet in der Regel auch unter Überdruck, der etwas geringer ist als der Druck, mit dem das sauerstoffhaltige Gas eingeführt wird (sofern ein solches eingeführt wird). Bevorzugt arbeitet der Oxidationsreaktor unter einem Druck von mehr als 0,101325 MPa (Normaldruck) bis 0,7 MPa, stärker bevorzugt bis 0,6 MPa.

Die Trocknung in Schritt c) des kontinuierlichen Verfahrens wird bei einer Temperatur von >50°C, vorzugsweise >60°C, insbesondere bevorzugt >70°C durchgeführt, wobei die Höchsttemperatur vorzugsweise 120°C beträgt. Die mittlere Verweilzeit für die Trocknung liegt in der Regel unter 20 Stunden, bevorzugt unter 10 Stunden, stärker bevorzugt unter 8 Stunden. Die Abkühlung des Produktes erfolgt vorzugsweise in einer rotierenden Trommel. Vorzugsweise erfolgt die Abkühlung des getrockneten Produkts auf eine Temperatur von unter 50°C, insbesondere bevorzugt auf Raumtemperatur (20 bis 30°C). Die Dauer der Abkühlung beträgt üblicherweise 10 bis 240 min, vorzugsweise 20 bis 180 min, insbesondere bevorzugt 30 bis 120 min.

Bezüglich weiterer verfahrenstechnischer Aspekte des kontinuierlichen Herstellungsverfahrens des organischen Düngemittels wird auf die Beschreibung der PCT/EP2017/060060 und die darin zitierten Druckschriften verwiesen.

Gemäß einer alternativen Ausführungsform der vorliegenden Erfindung umfasst das Dauerhumus-Wasserspeicherhybrid mindestens zwei wasserspeichernde Komponenten. Gemäß einer weiteren alternativen Ausführungsform umfasst das Dauerhumus-Wasserspeicherhybrid mindestens zwei wasserspeichernde Komponenten, wobei die mindestens zwei wasserspeichernden Komponenten mindestens ein wasserspeicherndes Material mineralischen Ursprungs und mindestens ein wasserspeicherndes Material organischen Ursprungs umfassen.

Das erfindungsgemäße Dauerhumus-Wasserspeicherhybrid kann in verschiedener Weise vorteilhaft verwendet werden. Insbesondere findet das erfindungsgemäße Dauerhumus-Wasserspeicherhybrid Verwendung als Pflanzensubstrat, als Zusatzstoff für Pflanzenerde und als Substratzusatzstoff zur Bodenverbesserung für kohlenstoffarme, dauerhumusbedürftige oder mit Dauerhumus verbesserungsfähige, durchlässige und in Bezug auf den Wasserhaushalt verbesserungswürdige Substrate bzw. Böden. Eine derartige Verwendung des erfindungsgemäßen Dauerhumus-Wasserspeicherhybrids führt überraschenderweise zu einer größeren Ertragssteigerung als das organische Düngemittel oder die mindestens eine wasserspeichernde Komponente alleine. Diese Ertragssteigerung erfolgt zusätzlich zur Wirkung, die aus der Zugabe von gewöhnlichem Düngemittel, wie NPK-Flüssigdünger, resultiert, da die Ertragssteigerung auch bei gleichzeitiger Zugabe beispielsweise von Flüssigdünger beobachtet werden kann. In einer weiteren Ausführungsform der vorliegenden Erfindung führt die Verwendung des erfindungsgemäßen Dauerhumus-Wasserspeicherhybrids zu einer Ertragssteigerung von > 10%, vorzugsweise > 15%, verglichen mit dem organischen Düngemittel oder der mindestens einen wasserspeichernden Komponente alleine.

Weiterhin führt die Verwendung des erfindungsgemäßen Dauerhumus-Wasserspeicherhybrids als Pflanzensubstrat, als Zusatzstoff für Pflanzenerde oder als Substratzusatzstoff zur Bodenverbesserung überraschenderweise zu einem geringeren Wasserverbrauch als das organische Düngemittel oder die mindestens eine wasserspeichernde Komponente alleine.

Die Verwendung des erfindungsgemäßen Dauerhumus-Wasserspeicherhybrids als Pflanzensubstrat, als Zusatzstoff für Pflanzenerde oder als Substratzusatzstoff zur Bodenverbesserung führt außerdem überraschenderweise zu einer höheren Wasserkapazität und einem verbesserten Wasserausnutzungsgrad der Pflanzen, verglichen mit dem organischen Düngemittel oder der mindestens einen wasserspeichernden Komponente alleine.

Bei der Verwendung des erfindungsgemäßen Dauerhumus-Wasserspeicherhybrids auf wenig bindigen oder nichtbindigen Böden mit einem tiefen Feinkornanteil kann das erfindungsgemäße Dauerhumus-Wasserspeicherhybrid seine vorteilhafte Wirkung besonders gut entfalten.

Wird das erfindungsgemäße Dauerhumus-Wasserspeicherhybrid als Pflanzensubstrat eingesetzt, umfasst die mindestens eine wasserspeichernde Komponente mindestens ein Material organischen Ursprungs. In einer Ausführungsform des erfindungsgemäßen Dauerhumus-Wasserspeicherhybrids zur Verwendung als Pflanzensubstrat ist das mindestens eine Material organischen Ursprungs auszuwählen aus Komposten, gerotteten Wirtschaftsdüngern, kohleartigen Produkten, Lignocellulosematerial, Holzfasern, Holzwolle, Kokosfasern, Hanffasern und Flachsfasern, vorzugsweise aus Komposten und gerotteten Wirtschaftsdüngern.

Bei Verwendung des erfindungsgemäßen Dauerhumus-Wasserspeicherhybrids als Pflanzensubstrat macht der Anteil an organischem Düngemittel beispielsweise 0,5-60,0 Vol.-%, vorzugsweise 0,5-40,0 Vol.%, bevorzugter 0,5-20,0 Vol.-%, noch bevorzugter 1,0-10,0 Vol.-%, insbesondere bevorzugt 1,0-5,0 Vol.-%, und der Anteil an dem mindestens einen Material organischen Ursprungs beispielsweise 40,0-99,5 Vol.-%, vorzugsweise 60,0-99,5 Vol.-%, bevorzugter 80,0-99,5 Vol.-%, noch bevorzugter 90,0-99,0 Vol.-%, insbesondere bevorzugt 95,0-99,0 Vol.-%, jeweils bezogen auf das Gesamtvolumen des Dauerhumus-Wasserspeicherhybrids, aus. Wie das erfindungsgemäße Dauerhumus-Wasserspeicherhybrid als Pflanzensubstrat zu verwenden ist, unterscheidet sich nicht grundlegend von der Verwendung herkömmlicher Pflanzensubstrate in der Landwirtschaft und Gärtnerei und ist dem Fachmann bekannt.

Bei Verwendung des erfindungsgemäßen Dauerhumus-Wasserspeicherhybrids als Zusatzstoff für Pflanzenerde macht der Anteil an organischem Düngemittel 1,0-99,0 Vol.-%, vorzugsweise 5,0-99,0 Vol.-%, bevorzugter 10,0-95,0 Vol.-%, noch bevorzugter 30,0-95,0 Vol.-%, 50,0-95,0 Vol.-%, 60,0-95,0 Vol.-% oder 70,0-90,0 Vol.-%, insbesondere bevorzugt ungefähr 90,0 Vol.-%, und der Anteil an der mindestens einen wasserspeichernden Komponente 1,0-99,0 Vol.-%, vorzugsweise 1,0-95,0 Vol.-%, bevorzugter 5,0-90,0 Vol.-%, noch bevorzugter 5,0-70,0 Vol.-%, 5,0-50,0 Vol.-%, 5,0-40,0 Vol.-% oder 10,0-30,0 Vol.-%, insbesondere bevorzugt ungefähr 10,0 Vol.-%, jeweils bezogen auf das Gesamtvolumen des Dauerhumus-Wasserspeicherhybrids, aus. Wie das Dauerhumus-Wasserspeicherhybrid als Zusatzstoff für Pflanzenerde zu verwenden ist, unterscheidet sich nicht grundlegend von der Verwendung herkömmlicher Zusatzstoffe in der Landwirtschaft und Gärtnerei und ist dem Fachmann bekannt. Die in dieser Weise mit Zusatzstoffen versetzte Pflanzenerde kann wiederum als Pflanzensubstrat, beispielsweise im landwirtschaftlichen oder gärtnerischen Pflanzenanbau, verwendet werden.

Bei Verwendung des erfindungsgemäßen Dauerhumus-Wasserspeicherhybrids als Zusatzstoff für Pflanzenerde macht das Dauerhumus-Wasserspeicherhybrid bevorzugt 0,1-90,0 Vol.-%, bevorzugter 0,1-30,0 Vol.-%, noch bevorzugter 0,5-20,0 Vol.-%, insbesondere bevorzugt 1,0-10,0 Vol.-% der Pflanzenerde aus.

Bei Verwendung des erfindungsgemäßen Dauerhumus-Wasserspeicherhybrids als Substratzusatzstoff zur Bodenverbesserung macht der Anteil an organischem Düngemittel 0,5-99,5 Vol.-%, vorzugsweise 5,0-95,0 Vol.-%, noch bevorzugter 10,0-90,0 Vol.-%, insbesondere bevorzugt 20,0-80,0 Vol.-%, und der Anteil an der mindestens einen wasserspeichernden Komponente 0,5-99,5 Vol.-%, vorzugsweise 5,0-95,0 Vol.-%, noch bevorzugter 10,0-90,0 Vol.-%, insbesondere bevorzugt 20,0-80,0 Vol.-%, jeweils bezogen auf das Gesamtvolumen des Dauerhumus-Wasserspeicherhybrids, aus. Wie das Dauerhumus-Wasserspeicherhybrid als Substratzusatzstoff zur Bodenverbesserung für kohlenstoffarme, dauerhumusbedürftige oder mit Dauerhumus verbesserungsfähige, durchlässige und in Bezug auf den Wasserhaushalt verbesserungswürdige Substrate bzw. Böden zu verwenden ist, unterscheidet sich nicht grundlegend von der Verwendung herkömmlicher Substratzusatzstoff zur Bodenverbesserung und Ertragssteigerung in der Landwirtschaft und Gärtnerei und ist dem Fachmann bekannt.

Das erfindungsgemäßen Dauerhumus-Wasserspeicherhybrids als Substratzusatzstoff zur Bodenverbesserung, beispielsweise für kohlenstoffarme, dauerhumusbedürftige oder mit Dauerhumus verbesserungsfähige, durchlässige und in Bezug auf den Wasserhaushalt verbesserungswürdige Substrate bzw. Böden ist vorzugsweise so zu verwenden, dass es 0,1-90,0 Gew.-%, bevorzugt 0,1-30,0 Gew.-%, bevorzugter 0,1-15,0 Gew.-%, noch bevorzugter 0,1-10,0 Gew.-% insbesondere bevorzugt 1,0-10,0 Gew.-% der obersten ca. 20 cm starken Bodenschicht ausmacht. Kohlenstoffarme, dauerhumusbedürftige oder mit Dauerhumus verbesserungsfähige, durchlässige und in Bezug auf den Wasserhaushalt verbesserungswürdige Substrate bzw. Böden sind beispielsweise Substrate bzw. Böden mit einem hohen Sand und/oder Kiesgehalt, einem geringen Anteil an organischer Bodensubstanz und einer hohen Wasserdurchlässigkeit. Das erfindungsgemäße Dauerhumus-Wasserspeicherhybrid kann auf solche kohlenstoffarme, dauerhumusbedürftige oder mit Dauerhumus verbesserungsfähige, durchlässige und in Bezug auf den Wasserhaushalt verbesserungswürdige Substrate bzw. Böden aufgetragen werden oder bis in eine Tiefe von 15-20 cm eingearbeitet werden. In einer bevorzugten Verwendungsform wird das Dauerhumus-Wasserspeicherhybrid bis in eine Tiefe von 20 cm eingearbeitet. Die Einzelkomponenten des Dauerhumus-Wasserspeicherhybrid können dabei einzeln aufgetragen bzw. eingearbeitet werden, beim Auftragen bzw. Einarbeiten kombiniert werden oder vorgemischt aufgetragen bzw. eigearbeitet werden.

Ein weiterer Aspekt der vorliegenden Erfindung ist ein Verfahren zur Herstellung eines Dauerhumus-Wasserspeicherhybrids, umfassend folgende Verfahrensschritte:
a) Überführen von Braunkohle und wässriger Ammoniaklösung mit einem pH-Wert größer 9 bis 12 in eine Suspension und alkalische Aktivierung der Suspension zunächst ohne Zufuhr eines sauerstoffhaltigen Oxidationsmittels;
b) Einspeisen des sauerstoffhaltigen Oxidationsmittels in die Suspension aus Braunkohle und wässriger Ammoniaklösung, wobei die Oxidation bei einer Reaktionstemperatur < 100 °C und einem Druck von 0,1-1 MPa abläuft;
c) Eindicken der in Schritt b) erhaltenen Produktsuspension zu einer Dispersion im wässrigen Milieu oder Trocknen der in Schritt b) erhaltenen Produktsuspension zu einem getrockneten Produkt, ohne Zufuhr des sauerstoffhaltigen Oxidationsmittels, und abschließendes Abkühlen, wodurch ein organisches Düngemittel gewonnen wird;
d) Kombinieren bzw. Mischen mindestens einer wasserspeichernden Komponente auszuwählen aus Materialien mineralischen oder organischen Ursprungs mit der Produktsuspension oder dem organischen Düngemittel des Schritts c), wodurch das Dauerhumus-Wasserspeicherhybrid erhalten wird;
wobei, in dem in dieser Weise hergestellten Dauerhumus-Wasserspeicherhybrid, der Anteil an dem organischen Düngemittel 0,5-99,9 Vol.-%, vorzugsweise 1,0-90,0 Vol.-%, und der Anteil an der mindestens einen wasserspeichernden Komponente 0,1-99,5 Vol.-%, vorzugsweise 10,0-99,0 Vol.-%, jeweils bezogen auf das Gesamtvolumen des Dauerhumus-Wasserspeicherhybrids, ausmacht.

Die Bedeutung von "Kombinieren" in Schritt d) des Herstellungsverfahrens ist breiter auszulegen als "Mischen" und umfasst unverzügliches Mischen, aber auch die Portionierung der Einzelbestandteile des Dauerhumus-Wasserspeicherhybrids, insbesondere des organischen Düngemittels und der mindestens einen wasserspeichernden Komponente, in Mengen, die den erfindungsgemäßen Volumenanteilen im Hybrid entsprechen, und das schlussendliche Vermischen bzw. Kombinieren vor oder im Zuge der Verwendung als Pflanzensubstrat, Zusatzstoff für Pflanzenerde oder Substratzusatzstoff in kohlenstoffarmen, dauerhumusbedürftigen oder mit Dauerhumus verbesserungsfähigen, durchlässigen und in Bezug auf den Wasserhaushalt verbesserungswürdigen Substraten bzw. Böden. In einer Ausführungsform des Herstellungsverfahrens des Dauerhumus-Wasserspeicherhybrids erfolgt das Mischen des organischen Düngemittels und der mindestens einen wasserspeichernden Komponente während der Trocknung oder des Abkühlens des organischen Düngemittels in Schritt c), oder im Anschluss daran. In einer alternativen Ausführungsform des Herstellungsverfahrens werden die mindestens eine wasserspeichernde Komponente und das organische Düngemittel in solchen Mengen portioniert, dass sie den erfindungsgemäßen Volumenanteilen des Hybrids entsprechen, die schließlich kurz vor oder während der Verwendung vermischt werden. Portionieren ist erfindungsgemäß als tatsächliches Portionieren der Einzelkomponenten des Hybrids oder als Verwendungsanweisung zu verstehen, die angibt in welchen Mengen (Portionen) die Einzelkomponenten des Hybrids bei der erfindungsgemäßen Verwendung zu vermischen bzw. zu kombinieren sind. Bevorzugt bedeutet "Kombinieren" in Bezug auf das erfindungsgemäße Verfahren "Mischen".

In Schritt d) können auch zwei, drei, vier, etc. wasserspeichernde Komponenten verwendet werden, wobei dann vorzugsweise mindestens eine wasserspeichernde Komponente mineralischen Ursprungs und mindestens eine wasserspeichernde Komponente organischen Ursprungs ist.

Bezüglich verfahrenstechnischer Aspekte und spezieller Ausführungsformen der Verfahrensschritte a) bis c) wird auf die detaillierte Beschreibung des Verfahrens zur Herstellung des organischen Düngemittels des erfindungsgemäßen Dauerhumus-Wasserspeicherhybrids verwiesen (siehe oben).

Das Dauerhumus-Wasserspeicherhybrid erhältlich nach dem erfindungsgemäßen Herstellungsverfahren hat die oben beschriebenen Produktmerkmale des erfindungsgemäßen Dauerhumus-Wasserspeicherhybrids, insbesondere die überraschenden vorteilhaften Eigenschaften, die sich bei der Verwendung als Pflanzensubstrat, als Zusatzstoff für Pflanzenerde oder als Substratzusatzstoff zur Bodenverbesserung zeigen.

### Ausführungsbeispiele

### Beispiel 1

Es wurden verschiedene erfindungsgemäße Dauerhumus-Wasserspeicherhybride hergestellt. Hierfür wurden landwirtschaftliche oder gärtnerische Pflanzsubstrate mit wasserspeichernden, porösen, quellfähigen Materialien - Komposte, Pflanzenschnitzel, Kokos, Gesteine, Mineralien, Mineralprodukten und Novihum® (Novihum® ist der Markenname eines organischen Düngemittels aus oxidierend und ammonisierend behandelter Braunkohle; die Herstellung kann wie in der EP 1 144 342 beschrieben erfolgen) - sei es als Gemisch oder in Kombination - versetzt und miteinander vermengt. Alternativ wurden erfindungsgemäße Dauerhumus-Wasserspeicherhybride aus Komposten, Pflanzenschnitzeln, Kokos, Gesteinen, Mineralien, Mineralprodukten und Novihum® direkt als eigenständige landwirtschaftliche oder gärtnerische Pflanzsubstrate zur Kulturpflanzenaufzucht hergestellt, wobei diese Hybride zur Verwendung als Pflanzensubstrate mindestens eine wasserspeichernde Komponente aus Materialien organischen Ursprungs, wie Komposte, Pflanzenschnitzel oder Kokos, umfassten. Wasserspeichernde, quellfähige Gesteine und Mineralien oder Mineralprodukte sind Tonminerale, tonmineralhaltige Substanzen (z.B. Bentonit), verarbeitete Mineralien und Gesteine wie Blähton oder Blähschiefer. Der Anteil an Novihum® betrug zwischen 1 Vol.-% und 99 Vol.-%. Als Pflanzensubstratzusatzstoff für die oberste 20 cm starke Bodenschicht beläuft sich die Aufwandmenge des Gemisches bzw. der Kombination auf zwischen 0,1 Gew.-% und 10 Gew.-%. Als Zusatzstoff für Pflanzenerde bzw. als eigenständiges Pflanzensubstrat beläuft sich die Aufwandmenge des Gemisches bzw. der Kombination auf zwischen 0,1 Vol.-% und 100 Vol.-%.

**Tabelle 1: Anwendungsbeispiele**

| **Nr.** | **Novihum®-Wasserspeicher Kombination** | | **Applikationsbeispiel** | **Anteil der Kombination in der Anwendung** | |
|---|---|---|---|---|---|
| | Wasserspeicher, Anteil | Novihum | | Anteil an Oberbodenschicht | Anteil an Planzensubstrat/ -erde |
| | (Vol.-%) | (Vol.-%) | | (Gew.-% / 20cm) | (Vol.-%) |
| A | 99% | 1% | Pflanzsubstrat zur Kulturpflanzenaufzucht | - | 100 %⁽¹⁾ |
| B | 80% | 20% | Zugabe zu kohlenstoffarmem, durchlässigem Boden | 10 % | - |
| C | 20% | 80% | Zugabe zu kohlenstoffarmem, durchlässigem Boden | 2 % | - |
| D | 10% | 90% | Zusatzstoff für Pflanzerden | - | 4 % |

| | | | | | |
|---|---|---|---|---|---|
| ⁽¹⁾ Bei der Verwendung des Dauerhumus-Wasserspeicherhybrids als Pflanzensubstrat wird mindestens eine wasserspeichernde Komponente organischen Ursprungs eingesetzt. | | | | | |

### Beispiel 2

### Anwendungsbeispiel für Hybrid aus organischem Düngemittel und organischem Wasserspeicher

Zum Vergleich wurden vier Versuchsvarianten mit Schlangengurken in einem Sandboden im geschützten Anbau (evaporationsgekühltes Gewächshaus) gegenübergestellt. Als organisches Düngemittel aus oxidierend und ammonisierend behandelter Braunkohle wurde Novihum® verwendet und als wasserspeichernde Komponente organischen Ursprungs wurde Rinderdungkompost verwendet:

### Variante 1:

0,5 kg/m² Novihum® sowie 1,0 kg/m² Rinderdungkompost wurden 15 cm tief in die Bodenoberfläche eingearbeitet.

### Variante 2:

1,0 kg/m² Rinderdungkompost wurden 15 cm tief in die Bodenoberfläche eingearbeitet.

### Variante 3:

0,5 kg/m² Novihum® wurden 15 cm tief in die Bodenoberfläche eingearbeitet.

### Variante 4:

Es wurde weder Novihum® noch Rinderdungkompost eingearbeitet. Es erfolgte lediglich die Gabe von Wasser und Nährstoffen analog zu den Varianten 1 bis 3.

Alle Varianten erhielten dieselben Nährstoff- und Wassermengen. Die Kultivationsdauer betrug 3 Monate.

**Tabelle 2: Novihum®-Kompost Hybrid**

| | **Variante 1** | **Variante 2** | **Variante 3** | **Variante 4** |
|---|---|---|---|---|
| Novihum® (0,5 kg/m²) | + | - | + | - |
| Kompost (1 kg/m²) | + | + | - | - |
| Düngung (NPK-flüssig) | + | + | + | + |
| Ertrag (kg/m²) | 1,08 | 0,93 | 0,76 | 0,61 |
| Ertragsdifferenz zu V4 | 77% | 52% | 25% | 0% |

| | | | | |
|---|---|---|---|---|
| +: Bestandteil dazugegeben; -: Bestandteil nicht dazugegeben; NPK-flüssig: Stickstoff-Phosphat-Kalium Flüssigdünger | | | | |

Überraschenderweise zeigte Variante 1, dass die Kombination aus Novihum® und Wasserspeicher organischen Ursprungs eine additive ertragssteigernde Wirkung, die grösser war als die Wirkung der jeweiligen Einzelkomponenten. In allen vier Versuchsvarianten wurde außerdem gewöhnlicher Flüssigdünger (NPK Flüssigdünger) verwendet. Die ertragssteigernde Wirkung erfolgt somit zusätzlich zur Ertragsteigerung die durch den gewöhnlichen Flüssigdünger erreicht wird. Aus dem Vergleich von Variante 1 und Variante 2 ergab sich außerdem, dass die Kombination von organischem Düngemittel und Wasserspeicher organischen Ursprungs einen 16 % bzw. 42 % größeren Ertrag einbrachte als der Wasserspeicher organischen Ursprungs bzw. das organische Düngemittel alleine.

### Beispiel 3

### Anwendungsbeispiel für Hybrid aus organischem Düngemittel und mineralischem Wasserspeicher

Zum Vergleich wurden auf einen sandigen, sehr wasserdurchlässigen Boden vier Versuchsvarianten gegenübergestellt. Als Testkultur wurde Gartenrasen verwendet. Als organisches Düngemittel aus oxidierend und ammonisierend behandelter Braunkohle wurde Novihum® verwendet und als wasserspeichernde Komponente mineralischen Ursprungs wurde Bentonit verwendet. Die Nährstoff- und Wasserversorgen war für alle Varianten gleich:

| | |
|---|---|
| Variante 1: | 0,5 kg/m² Novihum® und 0,5 kg/m² Bentonit |
| Variante 2: | 1,0 kg/m² Novihum® |
| Variante 3: | 1,0 kg/m² Bentonit |
| Variante 4: | Unbehandelt |

Wie aus der vorgestellte Versuchsanordnung hervorgeht, kam jeweils dieselben Gesamtmengen an Novihum®, Wasserspeicher, und Novihum®+Wasserspeicher zur Anwendung. Sechs Wochen nach Rasenaussaat wurden die vier Varianten auf Deckungsgrad (Anteil der durch Bewuchs abgedeckten Fläche), Auflaufergebnis (Anteil der gekeimten Samen an der Gesamtsamenmenge) und Gesamteindruck (Farbe, Dichte, Blattformen) überprüft.

Sechs Wochen nach Rasenaussaat zeigten sich folgende Befunde:
A) Der Deckungsgrad nahm in der Reihenfolge der Varianten 1,3,2,4 ab.
B) Das Auflaufergebnis nahm in der Reihenfolge der Varianten 1,3,2=4 ab.
C) Der Gesamteindruck nahm in der Reihenfolge der Varianten 1,3,2,4 ab.

Wie aus Ergebnis *B) Auflaufergebnis* hervorgeht, hat das Dauerhumus-Wasserspeicherhybrid, aus organischem Düngemittel und Wasserspeicher mineralischen Ursprungs eine synergistische Wirkung verglichen mit dem Dauerhumus und dem Wasserspeicher alleine. Analoge Ergebnisse zeigen sich für Hybride aus Novihum® und Tongranulat, Holzkohle oder Blähschiefer. Für andere in Bezug auf Porosität bzw. Wasserspeicherfähigkeit gleichartige Substanzen sind vergleichbare Ergebnisse zu erwarten.

## Patentansprüche

1. Dauerhumus-Wasserspeicherhybrid umfassend ein organisches Düngemittel aus oxidierend und ammonisierend behandelter Braunkohle und mindestens eine wasserspeichernde Komponente ausgewählt aus Materialien mineralischen oder organischen Ursprungs, wobei der Anteil an dem organischen Düngemittel 0,5-99,9 Vol.-%, vorzugsweise 1,0-90,0 Vol.-%, und der Anteil an der mindestens einen wasserspeichernden Komponente 0,1-99,5 Vol.-%, vorzugsweise 10,0-99,0 Vol.-%, jeweils bezogen auf das Gesamtvolumen des Dauerhumus-Wasserspeicherhybrids, ausmacht.

2. Dauerhumus-Wasserspeicherhybrid gemäß Anspruch 1, wobei die wasserspeichernden Komponenten aus Materialien mineralischen Ursprungs ausgewählt werden aus Tonmineralen, tonmineralhaltigen Substanzen, Perliten, Schichtsilikaten, Ton, Bentonit, Hectorit, Montmorillonit, Vermiculit, Zeolithen, Sepiolith, Attapulgit, gebranntem Ton, Blähton, Blähschiefer, vulkanischer Asche, Bims, Kieselgel und Smectiten.

3. Dauerhumus-Wasserspeicherhybrid gemäß Anspruch 1 oder 2, wobei die wasserspeichernden Komponenten aus Materialien organischen Ursprungs ausgewählt werden aus Komposten, gerotteten Wirtschaftsdüngern, kohleartigen Produkten, Lignocellulosematerial, Holzfasern, Holzwolle, Kokosfasern, Hanffasern und Flachsfasern.

4. Dauerhumus-Wasserspeicherhybrid gemäß einem der Ansprüche 1 bis 3, wobei der Anteil an organischem Düngemittel 0,5-20,0 Vol.%, vorzugsweise 1,0-10,0 Vol.-%, insbesondere bevorzugt 1,0-5,0 Vol.-%, und der Anteil an der mindestens einen wasserspeichernden Komponente 80-99,5 Vol.-%, vorzugsweise 90,0-99,0 Vol.-%, insbesondere bevorzugt 95,0-99,0 Vol.-%, ausmacht.

5. Dauerhumus-Wasserspeicherhybrid gemäß einem der Ansprüche 1 bis 3, wobei der Anteil an organischem Düngemittel 20,0-99,0 Vol.-%, vorzugsweise 50,0-95,0 Vol.-%, noch bevorzugter 70,0-90,0 Vol.-%, insbesondere bevorzugt ungefähr 90,0 Vol.-%, und der Anteil an der mindestens einen wasserspeichernden Komponente 1,0-80,0 Vol.-%, vorzugsweise 5,0-50,0 Vol.-%, noch bevorzugter 10,0-30,0 Vol.-%, insbesondere bevorzugt ungefähr 10,0 Vol.-%, ausmacht.

6. Dauerhumus-Wasserspeicherhybrid gemäß einem der Ansprüche 1 bis 3, wobei der Anteil an organischem Düngemittel 0,5-99,5 Vol.-%, vorzugsweise 5,0-95,0 Vol.-%, noch bevorzugter 10,0-90,0 Vol.-%, insbesondere bevorzugt 20,0-80,0 Vol.-%, und der Anteil an der mindestens einen wasserspeichernden Komponente 0,5-99,5 Vol.-%, vorzugsweise 5,0-95,0 Vol.-%, noch bevorzugter 10,0-90,0 Vol.-%, insbesondere bevorzugt 20,0-80,0 Vol.-%, ausmacht.

7. Dauerhumus-Wasserspeicherhybrid gemäß einem der vorhergehenden Ansprüche, wobei das organische Düngemittel **dadurch gekennzeichnet ist, dass** es ein C/N-Verhältnis von 7 bis 15 aufweist und gemessen am Gesamtstickstoff der Stickstoff chemisch unterschiedlich gebunden vorliegt, wovon
- 20 - 45 % als Ammonium-Stickstoff vorliegen
- 55 - 80 % organisch gebunden sind, wovon
- bis zu 20 % des Gesamtstickstoffs als Amid und
- bis zu 60 % nicht als Amid hydrolysierbar organisch gebunden sind.

8. Dauerhumus-Wasserspeicherhybrid gemäß einem der vorhergehenden Ansprüche, wobei das organische Düngemittel nach einem Verfahren erhältlich ist, umfassend die Verfahrensschritte:
a) Überführen von Braunkohle und wässriger Ammoniaklösung mit einem pH-Wert größer 9 bis 12 in eine Suspension und alkalische Aktivierung der Suspension zunächst ohne Zufuhr eines sauerstoffhaltigen Oxidationsmittels;
b) Einspeisen des sauerstoffhaltigen Oxidationsmittels in die Suspension aus Braunkohle und wässriger Ammoniaklösung, wobei die Oxidation bei einer Reaktionstemperatur < 100 °C und einem Druck von 0,1-1 MPa abläuft;
c) Eindicken der in Schritt b) erhaltenen Produktsuspension zu einer Dispersion im wässrigen Milieu oder Trocknen der in Schritt b) erhaltenen Produktsuspension zu einem getrockneten Produkt, ohne Zufuhr des sauerstoffhaltigen Oxidationsmittels, und abschließendes Abkühlen, wodurch das organische Düngemittel gewonnen wird.

9. Verwendung des Dauerhumus-Wasserspeicherhybrids gemäß einem der Ansprüche 1-8 als Zusatzstoff für Pflanzenerde oder Substratzusatzstoff zur Bodenverbesserung für kohlenstoffarme, dauerhumusbedürftige oder mit Dauerhumus verbesserungsfähige, durchlässige und in Bezug auf den Wasserhaushalt verbesserungswürdige Substrate bzw. Böden.

10. Verwendung des Dauerhumus-Wasserspeicherhybrids gemäß Anspruch 9 als Zusatzstoff für Pflanzenerde, wobei das Hybrid 0,1-90,0 Vol.-%, vorzugsweise 0,5-20,0 Vol.-%, insbesondere bevorzugt 1,0-10,0 Vol.-%, der Pflanzenerde ausmacht.

11. Verwendung des Dauerhumus-Wasserspeicherhybrids gemäß Anspruch 9 als Substratzusatzstoff zur Bodenverbesserung für kohlenstoffarme, dauerhumusbedürftige oder mit Dauerhumus verbesserungsfähige, durchlässige und in Bezug auf den Wasserhaushalt verbesserungswürdige Substrate bzw. Böden, wobei das Hybrid 0,1-90,0 Gew.-%, vorzugsweise 0,1-30,0 Gew.-%, noch bevorzugter 0,1-15,0 Gew.-%, insbesondere bevorzugt 1,0-10,0 Gew.-% der obersten 20 cm starken Bodenschicht ausmacht.

12. Verwendung des Dauerhumus-Wasserspeicherhybrids gemäß einem der Ansprüche 1-8 als Pflanzensubstrat, wobei die mindestens eine wasserspeichernde Komponente mindestens ein Material organischen Ursprungs umfasst,

13. Verfahren zur Herstellung eines Dauerhumus-Wasserspeicherhybrids, umfassend die folgenden Verfahrensschritte:
a) Überführen von Braunkohle und wässriger Ammoniaklösung mit einem pH-Wert größer 9 bis 12 in eine Suspension und alkalische Aktivierung der Suspension zunächst ohne Zufuhr eines sauerstoffhaltigen Oxidationsmittels;
b) Einspeisen des sauerstoffhaltigen Oxidationsmittels in die Suspension aus Braunkohle und wässriger Ammoniaklösung, wobei die Oxidation bei einer Reaktionstemperatur < 100 °C und einem Druck von 0,1-1 MPa abläuft;
c) Eindicken der in Schritt b) erhaltenen Produktsuspension zu einer Dispersion im wässrigen Milieu oder Trocknen der in Schritt b) erhaltenen Produktsuspension zu einem getrockneten Produkt, ohne Zufuhr des sauerstoffhaltigen Oxidationsmittels, und abschließendes Abkühlen, wodurch ein organisches Düngemittel gewonnen wird;
d) Kombinieren bzw. Mischen mindestens einer wasserspeichernden Komponente auszuwählen aus Materialien mineralischen oder organischen Ursprungs mit der Produktsuspension oder dem organischen Düngemittel des Schritts c), wodurch das Dauerhumus-Wasserspeicherhybrid erhalten wird;
wobei, in dem in dieser Weise hergestellten Dauerhumus-Wasserspeicherhybrid, der Anteil an dem organischen Düngemittel 0,5-99,9 Vol.-%, vorzugsweise 1,0-90,0 Vol.-%, und der Anteil an der mindestens einen wasserspeichernden Komponente 0,1-99,5 Vol.-%, vorzugsweise 10,0-99,0 Vol.-%, jeweils bezogen auf das Gesamtvolumen des Dauerhumus-Wasserspeicherhybrids, ausmacht.

14. Dauerhumus-Wasserspeicherhybrid erhältlich nach dem Verfahren gemäß Anspruch 13.
